# EUROPÄISCHE PATENTSCHRIFT

(11) **EP 1 462 670 B1**
(45) Veröffentlichungstag und Bekanntmachung des Hinweises auf die Patenterteilung: **15.04.2009**
(21) Anmeldenummer: 04004532.0
(22) Anmeldetag: 27.02.2004
(51) Int. Cl.: F16D 7/04, F16D 7/08, F16D 43/206

(54) **Ueberlastkupplung**
Overload coupling
Accouplement de surcharge

(30) Priorität: 28.03.2003 DE 10314219
(43) Veröffentlichungstag der Anmeldung: 29.09.2004
(73) Patentinhaber: Chr. Mayr GmbH & Co. KG, 87665 Mauerstetten (DE)
(72) Erfinder: Mayr, Fritz, 87665 Mauerstetten (DE); Vogl, Norbert, 86899 Landsberg (DE)
(74) Vertreter: Ruschke, Hans Edvard

(56) Entgegenhaltungen:
- DE-A- 4 101 018
- DE-A- 4 240 086
- US-A- 3 441 115
- US-A- 5 820 465
- PATENT ABSTRACTS OF JAPAN Bd. 0165, Nr. 19 (M-1330), 26. Oktober 1992 (1992-10-26) & JP 4 191526 A (TSUBAKIMOTO EMASON:KK), 9. Juli 1992 (1992-07-09)

## Beschreibung

Die Erfindung betrifft eine Überlastkupplung mit einer Klemmnabe mit den Merkmalen des Oberbegriffes des Patentanspruches 1.

Um Überlastkupplungen bei hochdynamischen Antrieben einzusetzen, ist es notwendig, eine Kupplung mit geringem Massenträgheitsmoment zu schaffen. Ein geringes Massenträgheitsmoment bedeutet, dass bei der Kupplung das Verhältnis von Außendurchmesser (Durchmesser D) zur Bohrung (Durchmesser d) derselben so klein wie möglich gehalten wird und dennoch ein hohes übertragbares Drehmoment bis zum Erreichen der Überlast gewährleistet wird.

Eine Schwierigkeit, eine solche Kupplung zu schaffen, besteht darin, dass auf kleinstem Raum eine Möglichkeit zum Klemmen der Nabe geschaffen werden muss. Dabei muss noch eine kostengünstige Lösung, d.h. so wenig wie möglich Einzelteile und eine einfache Montage der Einzelteile, gewährleistet werden.

Um eine in der Handhabung günstige Kupplung zu haben, sollte die Überlastkupplung im fertig montierten Zustand auf jede beliebige Bohrung ausgedreht werden können. Ein weiterer Vorteil wäre eine direkte Drehmomentablesung durch eine Skalierung mit Drehmomentangabe.

Ein zusätzlicher Vorteil wäre, wenn die Kupplung immer mit der gleichen Tellerfederzahl für unterschiedliche Drehmomentbereiche bestückt wird.

Der Erfindung liegt die Aufgabe zugrunde, eine solche Kupplung zu schaffen, die kostengünstig, platzsparend und trotzdem mit hohem Drehmoment ausgestattet ist. Diese Aufgabe wird erfindungsgemäß durch eine Kupplung mit den kennzeichnenden Merkmalen des Patentanspruches 1 gelöst. Weitere Merkmale der Erfindung ergeben sich aus den Unteransprüchen.

Eine kompakte Kupplungsbauform wird durch eine spezielle Form der Klemmnabe erreicht. Wichtig hierbei ist, dass der Klemmbereich einteilig mit der übrigen Nabe ausgeführt ist. Dadurch ist sie sehr kostensparend und der Bohrumgsdurchmesser kann bis zum Maximum ausgenutzt werden. Die Verzahnung für die Drehmomentmitnehmerkörper (Kugeln) wird auf kleinstem Durchmesser gehalten, damit die Nachstellmutter mit den Tellerfedern und der Druckscheibe von der gegenüberliegenden Seite der Radialklemmung montiert werden kann.

Vorzugsweise wird der Druckflansch zum Anbau eines Abtriebselementes durch ein Kugellager radial und axial fixiert.

Die Überlastkupplung findet ihren Einsatz hauptsächlich in hochdynamischen Antrieben, wie zum Beispiel in der Werkzeugmaschinenindustrie oder im allgemeinen Maschinenbau.

Die Sicherheitsnabe nach der DE 4101018 A1 besitzt ebenfalls eine einteilige Klemmnabe, welche jedoch im Außendurchmesser sehr groß ist, damit der Kugelübertragungsmechanismus entsprechend ausgeformt werden kann. Das Verhältnis Außendurchmesser zu Bohrung ist somit sehr viel höher. Bei dieser Kupplung müssen die Nachstellmutter 3, die Tellerfeder 6 und die Druckscheibe 7 von der linken Seite und der Druckflansch 9 und das Kugellager 11 von der rechten Seite montiert werden, weil die Nabe 4 einen radial nach außen vorspringenden Flansch 15 zur Aufnahme der Kugeln 8 aufweist. Dadurch entsteht der große Außendurchmesser der Kupplung, und es kann nur eine große Riemenscheibe mit hohem Massenträgheitsmoment als Abtriebselement angebaut werden.

Außerdem sind auch Kupplungen bekannt, bei welchen die Klemmnabe aus 2 Teilen besteht. Hierbei wird ein spezieller Klemmring auf der Nabe geklemmt. Dies ist notwendig, da ansonsten eine Montage der Kupplung nicht möglich wäre. Bei all diesen Kupplungen benötigt die Nabe einen größeren Durchmesser, um den Drehmomentübertragungsmechanismus (Kugeln) auf diese Durchmesser zu platzieren.

Die nächstliegende Überlastkupplung nach der JP 04191526 A hat einen grundsätzlich anderen Aufbau als die erfindungsgemäße Überlastkupplung. Auf den abgestuften Nabenabschnitt 12 mit dem kleinen Durchmesser wird (von rechts) der Druckflansch 13 mit dem Lager 16, der Druckscheibe 14, der Feder 11 und der Nachstellmutter 17 montiert. Bei dieser Anordnung muss das (nicht dargestellte) Abtriebselement (z. B. eine Riemenscheibe) am Druckflansch 13 befestigt werden, was zur Folge hat, dass die Nabe 12 keine radiale Klemmung aufweisen kann, weil der abgestufte Teil der Nabe 20 durch den Anbau eines Abtriebselementes (z. B. Riemenscheibe) verdeckt würde und für eine radiale Klemmung unzugänglich wäre.

Beim Gegenstand der vorliegenden Erfindung wurde der Drehmomentübertragungsmechanismus (Kugeln) auf den kleinstmöglichen Durchmesser gelegt. In der nachfolgenden Beschreibung werden Ausführungsbeispiele der Erfindung anhand der Zeichnungen beschrieben.

Es zeigen:
- Figur 1: einen Längsschnitt durch die Kupplung;

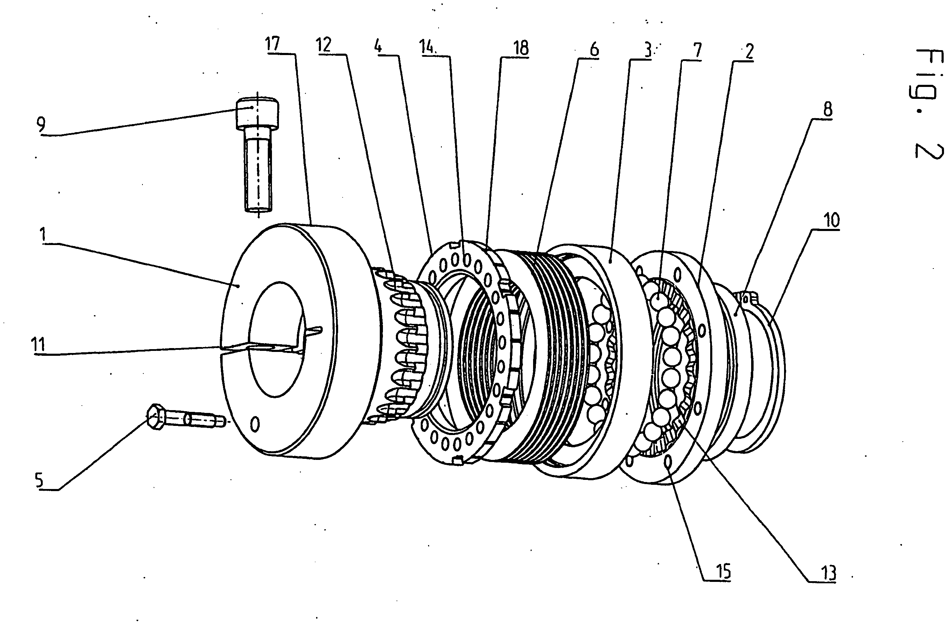

- Figur 2: eine Explosionszeichnung der gesamten Kupplung in 3-D-Ansicht;

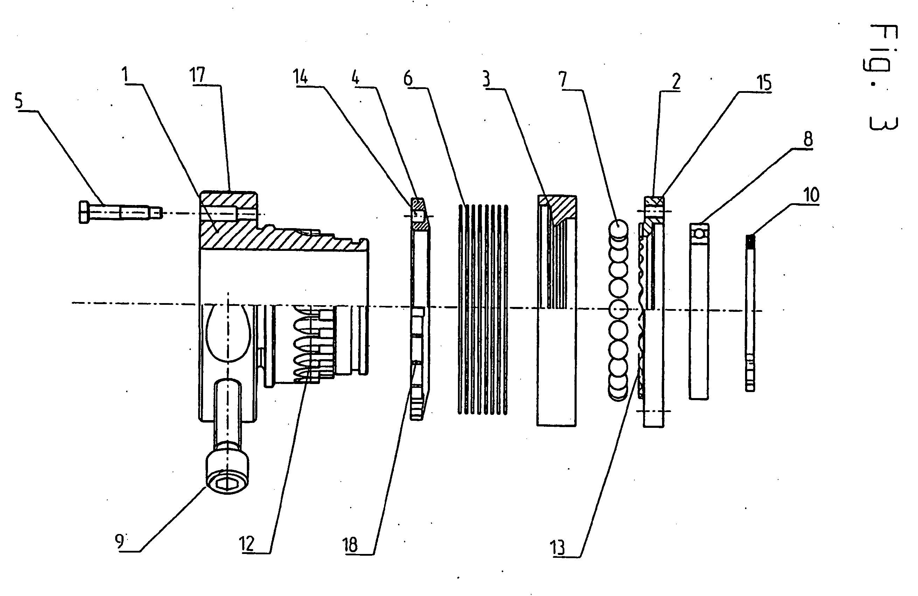

- Figur 3: eine Explosionszeichnung der gesamten Kupplung in 2-D-Ansicht;
- Figur 4: eine Ansicht des Skalierungsaufklebers und der Position der Markierungskerbe der Nachstellmutter;
- Figur 5: eine Ansicht der unterschiedlichen Tellerfederschichtung.

Die Klemmnabe (1) ist im Bereich des größeren Durchmessers (17) mit einem axialen Schlitz (11) versehen. Mit der Klemmschraube (9) wird die Klemmnabe (1) radial geklemmt und kann somit auf einer Welle (nicht dargestellt) befestigt werden. Somit kann das Drehmoment von der Antriebswelle auf die Klemmnabe (1) übertragen werden. Die Klemmnabe (1) besitzt eine Verzahnung (12), welche die Mitnahmekörper (7) z.B. in Form von Kugeln aufnimmt. Über Tellerfedern (6) wird eine Druckscheibe (3) gegen die Übertragungskörper (7) auf einen Druckflansch (2) mit axialer Verzahnung (13) gedrückt. Der Druckflansch (2) wird über ein Kugellager (8) in radialer und axialer Position fixiert. Das Kugellager (8) wird über den Sicherungsring (10) auf der Klemmnabe (1) fixiert.

Mit der Nachstellmutter (4), an der die Tellerfedern (6) anliegen, wird das einzustellende Drehmoment mittels Verdrehen der Nachstellmutter (4) eingestellt. Zur Sicherung dieser Nachstellmutter (4) ist eine axial verlaufende Sicherungsschraube (5) in die Klemmnabe (1) in der Nähe ihres Außenumfanges eingeschraubt. Diese Sicherungsschraube (5) ragt in eine der vielen axial sich erstrekkenden Bohrungen (14), welche sich auf dem Umfang der Nachstellmutter (4) verteilt befinden. Somit ist eine formschlüssige Sicherung der Nachstellmutter (4) gegeben. Es kann keine Verstellung des Drehmomentes während des Betriebes erfolgen.

### Funktion:

Das zu übertragende Drehmoment wird durch ein Antriebselement (nicht gezeichnet) über die auf dem Umfang verteilten Anschraubgewinde (15) des Druckflansches (2) übertragen. Von dort aus wird das Drehmoment über die axiale Verzahnung (13) des Druckflansches (2) auf die Übertragungskörper (7) (Kugeln) auf die Verzahnung (12) der Klemmnabe (1) übertragen. Durch die Klemmung der Klemmnabe (1) mit der Klemmschraube (9) wird das Drehmoment auf die anzutreibende Welle (nicht dargestellt) übertragen.

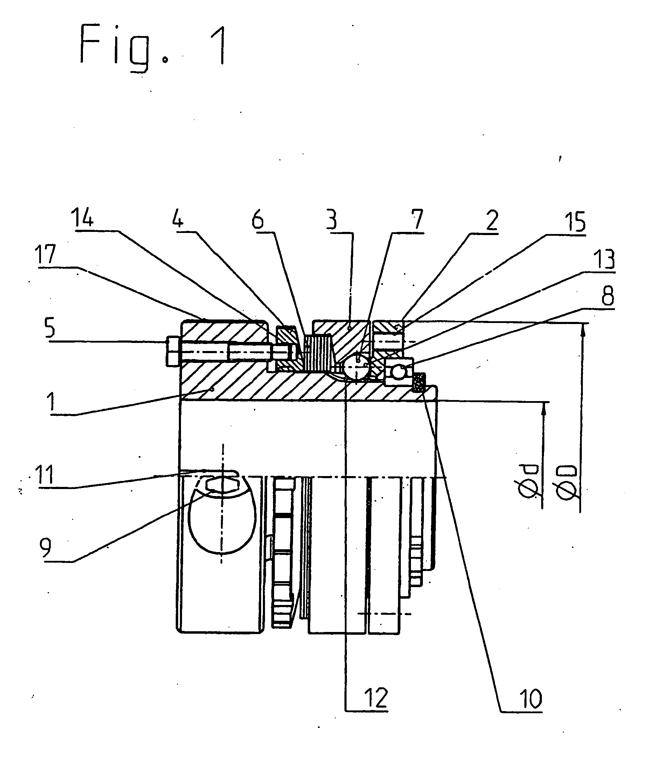

Entsteht nun eine Überlast, so wird das Drehmoment begrenzt, indem die Mitnehmerkörper sich in Fig. 1 nach links in Richtung Druckscheibe (3) entgegen der Federkraft bewegen, die durch die Tellerfedern (6), erzeugt wird. Diese axiale Bewegung kann über einen Nährungsinitiator (nicht dargestellt) abgegriffen werden. Mit diesem Signal wird dann der Antrieb still gesetzt. Durch Verdrehen der Nachstellmutter (4) kann das zu begrenzende Drehmoment auf einfache Art und Weise eingestellt werden.

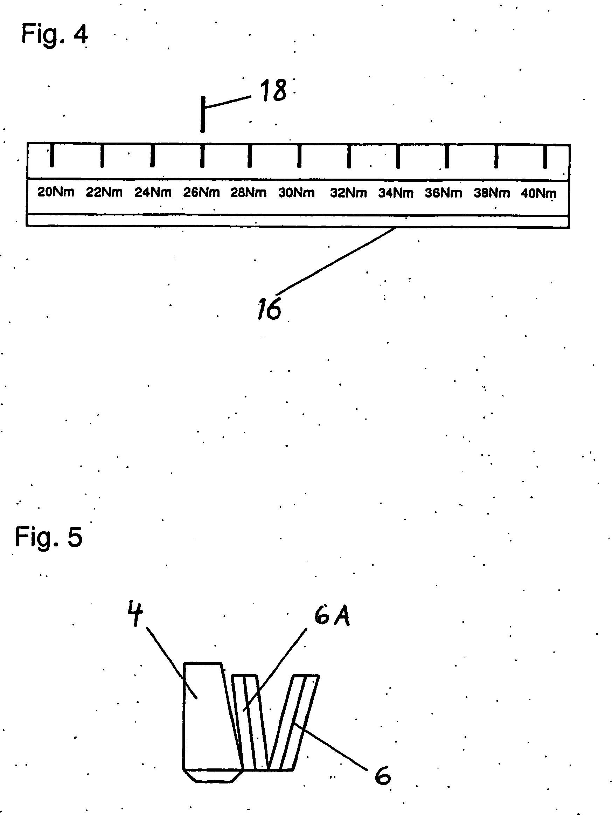

In Figur 4 wird die Skalierung beschrieben. Der Skalierungsaufkleber (16) wird am Außendurchmesser der Klemmnabe (17) aufgebracht. Nachdem das Drehmoment an der Kupplung eingestellt ist, wird eine der Markierungskerben der Nachstellmutter (18) farbig hervorgehoben und zeigt somit das eingestellte Drehmoment am Skalierungsaufkleber (16) an.

In Figur 5 wird die Anordnung der einzelner, Tellerfedern (6) dargestellt. Bei der Bestückung der Kupplung wird immer die selbe Tellerfederzahl verwendet. Möchte man jedoch ein geringeres Drehmoment einstellen, können einzelne Tellerfedern (6) außer Eingriff gebracht werden, indem sie entgegengesetzt eingebaut werden (180² gedreht). Dadurch ist sichergestellt, dass sich die Nachstellmutter (4) trotz der Veränderung der Federschichtung auf der Klemmnabe (1) immer in der selben axialen Position befindet. Somit sind keine Ausgleichsscheiben notwendig. welche die Nachstellmutter in die gleiche axiale Position wie zuvor bringen würden, weil die Tellerfedern (6), die außer Eingriff sind, wie Ausgleichsscheiben wirken.

Zum Herstellen der Fertigbohrung (Durchmesser d) im montierten Zustand der Kupplung wird in den Schlitz (11) ein Distanzblech (nicht dargestellt) eingelegt. Danach wird mit der Klemmschraube (9) die Klemmnabe (1) in geklemmten Zustand gebracht. Die Klemmnabe (1) kann am Außendurchmesser der Klemmnabe (17) eingespannt und die Bohrung (Durchmesser d) kann gefertigt werden. Dadurch ermöglicht sich eine günstige Lagerhaltung der Kupplung im fertig zusammengebauten Zustand und die vom Kunden benötigten unterschiedlichsten Bohrungen können schnell und problemlos an der fertig montierten Kupplung erzeugt werden.

### Bezugszeichenliste:

- 1: Klemmnabe
- 2: Druckflansch
- 3: Druckscheibe
- 4: Nachstellmutter
- 5: Sicherungsschraube
- 6: Tellerfedern in Eingriff
- 6a: Tellerfedern außer Eingriff
- 7: Übertragungskörper (Kugeln)
- 8: Kugellager
- 9: Klemmschraube
- 10: Sicherungsring
- 11: Schlitz
- 12: Verzahnung
- 13: Axiale Verzahnung
- 14: Bohrung
- 15: Anschraubgewinde
- 16: Skalierungsaufkleber
- 17: Außendurchmesser Klemmnabenbereich
- 18: Markierungskerbe der Nachstellmutter
- d: Innenbohrung/ -durchmesser der Klemmnabe
- D: Außendurchmesser der Klemmnabe

## Patentansprüche

1. Überlastkupplung mit einer Klemmnabe (1) und einem damit einteiligen Klemmnabenbereich mit größerem Durchmesser (17) und mit einer Umfangsverzahnung (12) auf der Klemmnabe mit axial beweglichen Übertragungskörpern (7), welche von einer Nachstellmutter (4) und über Federn und eine Druckscheibe (3) gegen die axial gerichtete Stirnverzahnung (13) eines Druckflansches (2) gedrückt werden und so eine einzustellende Federkraft und somit Drehmoment erzeugen,
**dadurch gekennzeichnet, dass** der Klemmnabenbereich mit einem axialen Schlitz (11) sowie einer letzteren überbrückenden Klemmschraube (9) versehen ist, die Federn als Tellerfedern (6) ausgebildet sind und die Verzahnung (12) auf dem gegenüber der Bohrung (d) kleinstmöglichen Durchmesser der Klemmnabe (1) angebracht ist und somit die Nachstellmutter (4) mit Tellerfedern (6) und Druckscheibe (3) über die Verzahnung (12) hinweg auf der Klemmnabe (1) montiert werden kann, wobei eine in der Nähe des Aussenumfangs (17) des Klemmnabenbereichs in axialer Richtung verlaufende Sicherungsschraube (5), welche durch den Klemmnabenbereich hindurchragt, in eine von mehreren axialen Bohrungen (14) in der Stirnfläche der Nachstellmutter (4) hineinragt und somit eine formschlüssige Sicherung der Nachstellmutter (4) bewirkt.

2. Überlastkupplung nach Anspruch 1, **dadurch gekennzeichnet, dass** am Außendurchmesser (17) des Klemmnabenbereichs ein Skalierungsaufkleber (16) entsprechend der Drehmomenteinstellung in einer bestimmten Position aufgeklebt und eine Markierungskerbe der Nachstellmutter (4) farbig hervorgehoben ist, die auf den eingestellten Drehmomentwert des Skalierungsaufklebers (16) zeigt.

3. Überlastkupplung nach einem der Ansprüche 1 und 2, **dadurch gekennzeichnet, dass** ein Teil der Tellerfedern (6) durch Umdrehen um 180° außer Funktion gesetzt wird und sich ein neuer, geringerer Drehmomentbereich ergibt, ohne dass die Nachstellmutter (4) ihre axiale Position verändert, wobei die Tellerfedern (6), welche außer eingriff sind, als Distanzscheiben dienen.

4. Verfahren zum Fertigstellen einer Überlastkupplung nach einem der voranstehenden Ansprüche, **dadurch gekennzeichnet, dass** man den Innendurchmesser (Durchmesser d) der Kupplung im ansonsten fertig montierten zustand bohrt, indem man die Kupplung am Außendurchmesser (17) des Klemmnabenbereichseinspannt und den Klemmnabenbereich über die Klemmschraube (9) und mittels eines Zwischenblechs im Schlitz (11) in gespannten Zustand bringt und anschließend die Fertigbohrung (Durchmesser d) in die Klemmnabe (1) durchgehend einbringt.

## Claims

1. An overload coupling comprising a clamp hub (1), a greater-diameter clamp hub section (17) integral therewith and peripheral teeth (12) disposed on said clamp hub and having axially movable transfer elements (7) adapted to be urged against the axially directed end face teeth (13) of a thrust flange (2) by an adjustment nut (4) via springs and a thrust disc (3), said springs and disc providing an adjustable spring force and, thus, a torque, **characterized in that** said clamp hub section is provided with an axially extending slit (11) and a clamp bolt (9) bridging the latter and **in that** teeth (12) are provided on the smallest possible diameter of clamp hub (1) in relation to bore (d) so as to enable adjustment nut (4) to be mounted together with Belleville (cupped spring) washers (6) and thrust disc (3) on clamp hub (1) over and along teeth (12), with a lock screw (5) axially extending near the periphery (17) of and through said clamp hub section and engaging one of a plurality of axial bores (14) in the end face of adjustment nut (4) so as to shape-lock adjustment nut (4) in place.

2. Overload coupling as in claim 1, **characterized by** a scale sticker (16) affixed in accordance with the torque setting in a pre-determined position on the outer diameter (17) of said clamp hub section and a colour-marked notch on adjustment nut (14) pointing to the torque setting indicated by scale sticker (16).

3. Overload coupling as in any of claims 1 and 2, **characterized by** a part of the Belleville washers (6) being de-activated by being turned over 180°, resulting in a new lower torque range without adjustment nut (4) changing its position, with those Belleville washers (6) that are disengaged acting as spacer discs.

4. A method of assembling an overload coupling as in any of the preceding claims, **characterized by** drilling the inner diameter (diameter d) of the coupling in the otherwise fully assembled condition thereof while clamping the coupling at the outer diameter (17) of said clamp hub section, by placing said section in a tensioned condition by inserting an intermediate sheet-metal plate in slit (11), and by then providing the finished bore diameter (d) into and through clamp hub (1).

## Revendications

1. Accouplement de surcharge comprenant un moyeu de serrage (1) et une zone de moyeu de serrage, d'une seule pièce avec ce dernier, de diamètre plus grand (17), et une denture périphérique (12) sur le moyeu de serrage avec des corps de transmission (7) mobiles dans la direction axiale, qui sont pressés par un écrou de rattrapage de jeu (4), par l'intermédiaire de ressorts et d'un disque de pression (3), contre la denture droite (13), orientée dans la direction axiale, d'une bride de pression (2) et génèrent une force de ressort à régler et ainsi un couple, **caractérisé en ce que** la zone de moyeu de serrage est munie d'une fente axiale (11) ainsi que d'une vis de serrage (9) pontant cette dernière, les ressorts sont réalisés sous forme de ressorts à disques (6), et la denture (12) est placée sur le diamètre le plus petit possible, par rapport à l'alésage (d), du moyeu de serrage (1) et l'écrou de rattrapage de jeu (4) peut être ainsi monté avec des ressorts à disques (6) et un disque de pression (3), par-dessus la denture (12), sur le moyeu de serrage (1), une vis de blocage (5), qui s'étend dans la direction axiale au voisinage du pourtour extérieur (17) de la zone de moyeu de serrage et pénètre au travers de cette dernière, pénétrant dans l'un des multiples alésages axiaux (14) de la face frontale de l'écrou de rattrapage de jeu (4) et provoquant ainsi un blocage par coopération de forme de l'écrou de rattrapage de jeu (4).

2. Accouplement de surcharge suivant la revendication 1, **caractérisé en ce qu'**une étiquette adhésive d'échelle (16) est collée dans une position définie sur le diamètre extérieur (17) de la zone de moyeu de serrage, en conformité avec le réglage du couple, et une encoche de repérage de l'écrou de rattrapage de jeu (4), qui indique la valeur du couple réglée de l'étiquette adhésive d'échelle (16), est mise en évidence par une couleur.

3. Accouplement de surcharge suivant l'une des revendications 1 et 2, **caractérisé en ce qu'**une partie des ressorts à disques (6) est mise hors fonction par rotation de 180° et il en résulte une nouvelle plage de couple, plus faible, sans que l'écrou de rattrapage de jeu (4) modifie sa position axiale, les ressorts à disques (6), qui sont hors de prise, servant alors de disques d'écartement.

4. Procédé d'achèvement d'un accouplement de surcharge suivant l'une des revendications précédentes, **caractérisé en ce qu'**on alèse le diamètre intérieur (diamètre d) de l'accouplement dans l'état de montage sinon fini, en fixant l'accouplement sur le diamètre extérieur (17) de la zone de moyeu de serrage et en amenant dans l'état de fixation la zone de moyeu de serrage par l'intermédiaire de la vis de serrage (9) et au moyen d'une tôle intermédiaire dans la fente (11), puis en pratiquant en continu l'alésage fini (diamètre d) dans le moyeu de serrage (1).
